**Europäisches Patentamt**

**European Patent Office**

**Office européen des brevets**

(19)

(11) Veröffentlichungsnummer: **0 029 491**
**A1**

# (12) EUROPÄISCHE PATENTANMELDUNG

(21) Anmeldenummer: **80105582.3**

(22) Anmeldetag: **17.09.80**

(51) Int. Cl.³: **B 29 F 1/10**

(30) Priorität: **26.11.79 DE 2947621**

(43) Veröffentlichungstag der Anmeldung:
**03.06.81 Patentblatt 81/22**

(84) Benannte Vertragsstaaten:
**BE CH FR GB IT LI NL SE**

(71) Anmelder: **WOCO Franz-Josef Wolf & Co.**
**Sprudelallee 19**
**D-6483 Bad Soden-Salmünster(DE)**

(72) Erfinder: **Wolf, Franz Josef**
**Sprudelallee 19**
**D-6483 Bad Soden-Salmünster(DE)**

(74) Vertreter: **Jaeger, Klaus, Dr. et al,**
**Jaeger, Grams & Pontani Patentanwälte Bergstrasse 48**
**1/2**
**D-8035 München-Gauting(DE)**

(54) **Formwerkzeug.**

(57) Das Formwerkzeug zum Umspritzen definierter Bereiche eines formstabilen Formteils mit einer beim Umspritzen plastischen Formmasse unter Freilassung definierter Bereiche auf der Oberfläche dieses Formteils weist ein nur Bruchteile eines Millimeters gegenüber den unmittelbar angrenzenden Flächen des Formwerkzeugs vorspringendes, als Schneidkantenprofil ausgebildetes Kantendichtungs-profil (9,10) auf, das die auf der Oberfläche des Formteils (5) freizulassenden Bereiche in sich geschlossen umlaufend abgrenzt und bei geschlossenem Formwerkzeug unter Andruck auf der Oberfläche des Formteils anliegt bzw. in diese eingedrückt wird. Dieses Formwerkzeug dient insbesondere dem Umspritzen von Formteilen aus Kunststoff oder Metall mit einer vulkanisierbaren Kautschuk- oder Kunststoff-Formmasse.

Fig. 1

EP 0 029 491 A1

Beschreibung

Die Erfindung betrifft ein Formwerkzeug der im Oberbegriff des Patentanspruchs 1 genannten Art.

Es ist landläufiger Stand der Technik, Formteile aus formstabilem Werkstoff, beispielsweise aus Metall oder Kunststoff, auf vorgegebenen Oberflächenbereichen mit Formmassen zu umspritzen. Zu diesem Zweck werden die Formteile in einen Teil eines geöffneten Formwerkzeugs eingelegt, wird anschließend das Formwerkzeug geschlossen und dann die Formmasse in den entsprechend ausgebildeten Formhohlraum eingespritzt. Dabei liegt das Formwerkzeug profilkomplementär und flächig unter dem Andruck des Schließdrucks des Formwerkzeugs an jenen Oberflächenbereichen des Formteils fest an, die nicht mit der eingespritzten Masse bedeckt werden sollen.

Formmassen im Sinne der Erfindung sind insbesondere unvernetzte Kautschukmassen, die nach dem Einspritzen in den Formhohlraum vernetzt werden, sowie thermoplastische und duroplastische Kunststoff-Formmassen. Die zu umspritzenden Formteile sind beispielsweise Scheiben, Platten, Profile, Ringe oder Gitter. Der Begriff "Umspritzen" bezieht sich im Rahmen der Erfindung sowohl auf das Spritzgießen als auch auf das Formpressen sowie auf verwandte Verfahren.

Verwendet werden solche Verfahren beispielsweise zum Anspritzen von Dichtungselementen an Formteile aller Art, insbesondere Verschlußteile.

Bei der Durchführung des Verfahrens wird in das geöffnete Formwerkzeug zunächst das zu umspritzende Formteil eingelegt, und wird dann nach dem Schließen des Formwerkzeugs die Formmasse unter sehr hohem Druck und im plastischfließfähigen Zustand in den Formhohlraum eingepreßt. Dabei ist es bei den bekannten Formwerkzeugen und Verfahren unausbleiblich, daß die Formmasse zumindest in den Randbereichen in die Trennebene zwischen dem Formwerkzeug und dem Formteil eindringt. Dies führt zur Bildung von ausgefransten Rändern und Häutchen auf den Oberflächenbereichen des Formteils, die bestimmungsgemäß eigentlich nicht mit der Formmasse bedeckt sein sollten. Dieses Eindringen der unter sehr hohem Druck in den Formhohlraum eingespritzten Formmasse in die Trennebene ist in der Praxis deshalb nicht zu vermeiden, weil die zu umspritzenden Teile in aller Regel Stanzteile, Spritzgießteile oder Druckgußteile sind, deren Oberflächen nie perfekt der Solloberfläche entsprechen. Das Problem wird dann noch gravierender, wenn die Formmasse eine unvernetzte Kautschukmischung ist, die bekanntermaßen besonders stark zum Eindringen in solche Trennebenenspalte neigt. Kautschukmischungen vermögen, wenn sie unter hohem Druck in einen Formhohlraum eingespritzt werden, selbst dann in den Trennebenenspalt zwischen zwei stoßenden Flächen einzutreten, wenn diese Flächen präzisionspoliert sind.

Aus diesem Grund hat sich das Umspritzen formstabiler Formteile mit beim Spritzen plastischer Formmassen nur zur Herstellung gröberer Teile bewährt, bei denen die Bildung von Häutchen aus dem umspritzten Werkstoff die Produktqualität nicht beeinträchtigen. Präzisionsteile mit absolut scharfer Grenze zwischen dem umspritzten Material und der auf dem Formteil freizulassenden Oberfläche sind nach Maßstäben der technischen Serienproduktion bislang nicht herstellbar.

Der Erfindung liegt die Aufgabe zugrunde, ein Formwerkzeug zu schaffen, mit dem formstabile Formteile in der Weise
nach Maßstäben der Serienfertigung und Massenfertigung
mit einer beim Spritzen plastischen Formmasse umspritzt
werden können, daß zwischen dem umspritzten Werkstoff und
auf dem Formteil freizubleibenden Oberflächen scharf und
sauber begrenzte Grenzlinien oder Grenzkanten erhalten
werden wie sie für Präzisionsteile gefordert sind.

Zur Lösung dieser Aufgabe schlägt die Erfindung ein Formwerkzeug der eingangs genannten Art vor, das erfindungsgemäß die im kennzeichnenden Teil des Patentanspruchs 1
genannten Merkmale aufweist.

Der Grundgedanke der Erfindung liegt also darin, von der
bisher verwendeten Flächendichtung zwischen dem Formteil
und dem Formwerkzeug zu einer Kantendichtung überzugehen,
die den freizulassenden Oberflächenbereich des Formteils
geschlossen umgibt. Dieser Ausbildung des Formwerkzeugs
liegt dabei die Überlegung zugrunde, daß der Dichtkantenabdruck im Formteile, der nie ganz zu vermeiden ist, so
dicht an und unmittelbar im Grenzübergang zwischen dem
umspritzten Werkstoff und der freizulassenden Oberfläche
des Formteils liegt, daß er diese Oberfläche in keiner Weise
beeinträchtigt, in aller Regel ohne ein Ablösen des umspritzten Werkstoffs von der Formteiloberfläche nicht einmal zu bemerken ist.

Das Kantendichtungsprofil ist vorzugsweise als nur Bruchteile eines Millimeters gegenüber den unmittelbar angrenzenden Oberflächen des Formwerkzeugs vorspringendes Schneidkantenprofil mit im wesentlichen dreieckigem Querschnitt,
und zwar vorzugsweise gleichseitig dreieckigem oder rechtwinklig dreieckigem Querschnitt, ausgebildet. Das rechtwinklig dreieckige Schneidkantenprofil wird vorzugsweise
dann gewählt, wenn die Dichtungsschneidkante unmittelbar an einer Kante oder einem Rücksprung des Formwerkzeugs
liegt. Der eine Schenkel des rechten Winkels des Dreiecksprofils liegt dann exakt in der Rücksprungfläche, die
geneigt oder senkrecht zu der auf dem Formteil nicht zu
umspritzenden Fläche steht.

Mit einem so ausgebildeten Formwerkzeug werden scharf
begrenzte Übergänge zwischen dem umspritzten Werkstoff
und der auf dem Formteil nicht zu umspritzenden Oberfläche
erhalten. So umspritzte Formteile können auch als Präzisionsteile nach den Prinzipien der Serienfertigung und Massenfertigung hergestellt werden. Insbesondere können nach
diesem Verfahren beispielsweise aus Aluminium oder Kunststoff bestehende Abschlußscheiben für Becher oder anders
geformte Gehäuse mit einer Gummidichtung sauber umspritzt
werden.

Die Erfindung ist im folgenden anhand eines Ausführungsbeispiels in Verbindung mit der Zeichnung näher erläutert.
Es zeigt die einzige

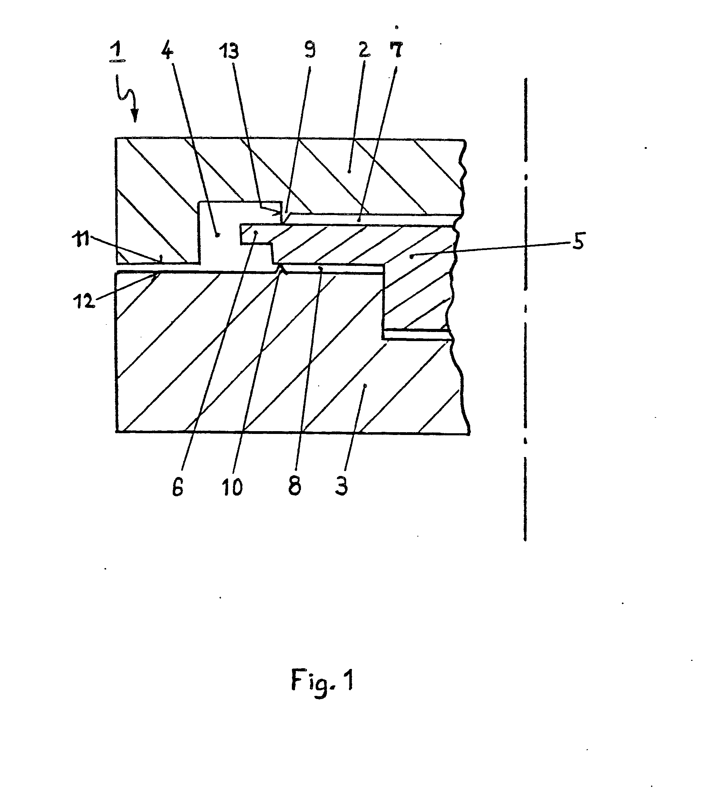

Fig. 1    in schematischer und nicht maßstäblicher
         Schnittdarstellung ein noch nicht ganz
         geschlossenes Formwerkzeug mit eingelegtem Formteil.

In der Fig. 1 ist im Querschnitt und in Teildarstellung
ein zweiteiliges Formwerkzeug 1 gezeigt, das aus einem
Oberteil 2 und einem Unterteil 3 besteht. In den Formhohlraum 4 des Formwerkzeugs 1 ist das zu umspritzende Formteil 5
eingelegt. In dem in Fig. 1 gezeigten Ausführungsbeispiel
ist das Formteil 5 eine kreisrunde Profilscheibe aus
Aluminium, deren äußerer Rand 6 mit einer Gummidichtung
zu umspritzen ist. Die Gummimasse wird nach dem endgültigen
Verschließen des Formwerkzeugs 1 in den Formhohlraum 4 eingespritzt.

Um zu verhindern, daß die in den Formhohlraum 4 eingespritzte Gummiformmasse in den Trennebenenspalt 7 zwischen
der Unterseite des Oberwerkzeugs 2 und der Oberseite des
Formteils 5 und in den Trennebenenspalt 8 zwischen der
Oberseite des Unterwerkzeugs 3 und der Unterseite des
Formteils 5 eintritt, sind um den Außenrand der auf dem
Formteil 5 von der Gummimasse freizuhaltenden Oberflächen
in sich geschlossen umlaufende Kantendichtungsprofile, hier
Schneidkantenprofile 9 und 10 einstückig am Oberwerkzeug 2
bzw. am Unterwerkzeug 3 angeformt. In der Fig. 1 sind diese
Schneidkantendichtungsprofile 9, 10 der Klarheit der Darstellung wegen übertrieben groß dargestellt. Das Werkzeug 1
ist in einem Zustand unmittelbar vor dem endgültigen Schliessen dargestellt. Sobald die endgültige Schließkraft die
beiden Werkzeugteile 2,3 gegeneinanderzwingt, so daß diese
mit ihren Flächen 11,12 bündig aneinanderliegen, drücken
sich die Schneidkantenprofile 9,10 in die Oberflächen des
Formteils 5 ein und dichten dadurch den Formhohlraum 4
hermetisch gegen die Trennebenenspalte 7,8 ab. Die aufeinanderliegenden Trennebenenfläche 11,12 der Werkzeugteile
2,3 brauchen nicht in dieser Weise abgedichtet zu sein,
da an dieser Stelle die übliche feine Gratbildung in der
Regel entweder ohne weiteres tolerierbar ist oder in der
Praxis billiger nachträglich abtragbar ist.

Das Schneidkantenprofil 9 hat im wesentlichen den Querschnitt eines rechtwinkligen Dreiecks, wobei ein Schenkel
des rechten Winkels fluchtend mit dem Rücksprung 13 im
Oberwerkzeug 2 ausgebildet ist.

Das Schneidkantenprofil 10 hat im Querschnitt im wesentlichen die Form eines gleichseitigen Dreiecks.

## JAEGER, GRAMS & PONTANI
### PATENTANWÄLTE

0029491

DIPL.CHEM. DR. KLAUS JAEGER DIPL.-ING. KLAUS D. GRAMS DR.-ING. HANS H. PONTANI
8035 GAUTING · BERGSTR. 48½ 8031 STOCKDORF · KREUZWEG 34 8752 KLEINOSTHEIM · HIRSCHPFAD 3

WOC-78-*EP*

WOCO Franz-Josef Wolf & Co.
Sprudelallee 19, 6483 Bad Soden-Salmünster

Formwerkzeug

### Patentansprüche

1. Formwerkzeug zum Umspritzen definierter Bereiche eines formstabilen Formteils mit einer beim Umspritzen plastischen Formmasse,
   g e k e n n z e i c h n e t  durch
   ein Kantendichtungsprofil (9,10), das die auf dem Formteil (5) nicht zu umspritzenden Oberflächenbereiche definierend und in sich geschlossen umlaufend an der dieser freizulassenden Oberfläche des Formteils (5) zugekehrten und bei geschlossenem Formwerkzeug (1) an dieser unter Andruck anliegenden Fläche des Formwerkzeugs ausgebildet ist.

TELEPHON: (089) 8502030; 8574080; (06027) 8825 · TELEX: 521777 Isar d

2. Formwerkzeug nach Anspruch 1,
   dadurch  g e k e n n z e i c h n e t ,
   daß das Kantendichtungsprofil ein nur Bruchteile eines
   Millimeters gegenüber den unmittelbar angrenzenden Flächen
   des Formwerkzeugs vorspringendes Schneidkantenprofil
   mit ungefähr gleichseitig dreieckigem (10) oder rechtwinklig dreieckigem (9) Querschnitt ist.

3. Verwendung des Formwerkzeugs nach einem der Ansprüche 1
   oder 2 zum Umspritzen von Formteilen aus Kunststoff oder
   Metall, insbesondere Aluminium, mit einer vulkanisierbaren
   Kautschukformmasse oder einer Kunststoff-Formmasse.

0029491

1/1

Fig. 1

**0029491**

Nummer der Anmeldung

## EUROPÄISCHER RECHERCHENBERICHT

Europäisches Patentamt

EP 80 10 5582

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | GB - A - 493 009 (MOULDED PRODUCTS LTD.)<br><br>* Seite 3, Zeilen 62-101; Figuren 2,3 *<br><br>-- | 1,2,3 | B 29 F 1/10 |
| X | CH - A - 499 375 (C.A.V.LTD.)<br><br>* Spalte 3, Zeilen 41-49; Figur 8 *<br><br>-- | 1,2 | |
| | FR - A - 2 140 536 (NORIT)<br><br>* das ganze Dokument *<br>& DE - A - 2 128 316<br><br>-- | 1,2 | **RECHERCHIERTE SACHGEBIETE (Int. Cl.³)**<br><br>B 29 F |
| | NL - A - 66 12 915 (TAPIJTFABRIEK NOORDSTER)<br><br>* das ganze Dokument *<br><br>-- | 1,2 | |
| | DE - A - 2 246 913 (O.BOSSE)<br><br>* Seite 3, Zeile 26 bis Seite 4, Zeile 16; Figur 1 *<br><br>-- | 1,2 | |
| | DE - B - 1 198 242 (H.BEA)<br><br>* Spalte 4, Zeilen 29-37; Figur 2 *<br><br>-------- | 1,2 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-02-1981 | BOLLEN |

EPA form 1503.1  06.78